# EUROPEAN PATENT APPLICATION

(11) **EP 3 585 056 A1**
(43) Date of publication of application: **25.12.2019**
(21) Application number: 18382443.2
(22) Date of filing: 20.06.2018
(51) Int. Cl.: H04N 19/507

(54) **METHOD AND SYSTEM FOR OPTIMIZING EVENT PREDICTION IN DATA SYSTEMS**

(71) Applicant: Telefónica, S.A., 28013 Madrid (ES)
(72) Inventor: MOZO VELASCO, Alberto, 28031 MADRID (ES); GÓMEZ CANAVAL, Sandra, 28031 MADRID (ES); PASTOR PERALES, Antonio, 28013 MADRID (ES); LOPEZ, Diego R., 28013 MADRID (ES)
(74) Representative: Herrero & Asociados, S.L.

(57) **Abstract**

A system and method for optimizing event prediction in data systems, wherein at least one source (100) comprises:
a data collector periodically collecting (101) real data values (300) to generate a stream of data modeled as a time series;
a generator (110) of prediction models (M1, M2, M3, ..., Mx) to which the collected values from the data collector are input;
a first forecast module (120) receiving (102) one of the generated prediction models (M1, M2, M3, ..., Mx) for generating a predicted value (310) and computing a committed error (320) by comparing the predicted value (310) with the real data value (300);
and wherein the source (100) sends (105) the committed error (320) within the time series to the destination (200) only if the committed error (320) exceeds a threshold and wherein the destination (200) comprises:
a second forecast module (210) receiving (204) the same prediction model (M1, M2, M3, ..., Mx) from the generator (110) through a communication channel (103);
a correction module (220) for obtaining (203) the real data value by the generated prediction model (M1, M2, M3, ..., Mx) and applying the committed error (320) if received (202) from the source (100).

## Description

### Field of the invention

The present invention has its application within the Information and Communications Technologies (ICT) sector, more specifically, relates to the deployment of prediction models that can be adjusted dynamically to the variations and evolution of data along the time.

More particularly, the present invention refers to a method and system for optimizing event prediction in data systems in order to minimize the amount of data to be transmitted and maximize prediction accuracy.

### Background of the invention

In many network and data center infrastructures, periodic data monitoring and processing phases are done in different and separate places. Therefore, non-negligible amounts of information have to be transmitted from the place in which data is gathered to the location where this data are processed later. Even in a data center with optical links, the frequency and size of the data can generate unapproachable bandwidth requirements during data transmission or at least a highly inefficient consumption of network resources.

Nowadays, there exist many efficient solutions for predicting, encoding and transmitting data and in particular multimedia signals (e.g. images and voice). Some references found in the prior art are the following:
US4953024 is related to the family of mechanisms for efficiently encoding and transmitting images, aimed at reducing the amount of information to be transmitted for pictures. The reduction is achieved in an encoding circuit that is placed at the output of a predictor component. No mention is made to the efficiency or accuracy of predictor mechanisms and so, a generic predictor is assumed, relaying the effectiveness of the solution exclusively to the encoding phase. In particular, and with respect to other adaptive quantization methods, this solution emphasize in reducing the produced quantization errors with optimally dimensioned variable length encoders.
US5907351 is related also to the family of mechanisms for efficiently encoding and transmitting images, transmitting and remotely displaying the audio and visual portion of a person speaking so that the audio and visual signals can be synchronized. In this approach, the audio signal is constantly transmitted to the receiver and is also used to create or encode a predicted image of the lips of the person speaking in the image. This technique is referred to as cross modal or bi-modal encoding. The predictor module of this solution tries to predict lips movements in order to avoid transmitting them, by using previous phoneme spoken as input.

Prior-art solutions do not address the dynamic adaptation of predictors to the evolution of data. Additionally, should several signals be monitored in the same machine, current predictors tend to consider each variable as an isolated signal and so potential correlations emerging among locally generated variables are not exploited.

Therefore, providing that it cannot be assumed a fixed data distribution for the signals monitored in a data center, there is a need in the state of the art for designing data systems with predictors that can detect data evolution and dynamically adapt predictions to new data patterns and distributions without manual intervention.

### Summary of the invention

The present invention solves the aforementioned problems and overcomes previously explained state-of-art work limitations by providing a method and system to optimize prediction components in data systems. This invention proposes to minimize the amount of data to be transmitted in data systems by deploying prediction components that can be adjusted dynamically to the variations and evolution of data along the time. Both the source (where data is collected) and the destination (where data is processed) execute identical prediction models. In case the prediction obtained at an instant of time in the source is similar to the monitored data, no data are sent from the source to the destination, as these data will be generated in the destination using a prediction module. Otherwise just the difference between the predicted data and the monitored data is sent from the source to the destination. When data evolve, the predictor can adjust dynamically its internal parameters in order to maximize prediction accuracy.

This invention can be leveraged by the application of the recently emerged deep neural network architectures and in particular convolutional neural networks (CNNs) that clearly outperform traditional time-series forecasting models when trained with big amounts of data examples.

A first aspect of the present invention refers to a method for optimizing event prediction in data systems, wherein at least one source of a data system collects periodically, at different time instants, real data values of at least one variable, the collected values being used to generate a stream of data modeled as a time series of values and each value of the time series corresponding to a time instant, and wherein the stream of data is obtained by a destination of the data system, the method comprising the following steps:
- for each real data value collected by each source of the data system, generating a predicted value at a certain time instant by using a prediction model in the source;
- computing a committed error by comparing the predicted value with the real data value collected at the certain time instant in the source; and
- sending data, at the certain time instant within the time series, from the source to the destination only if the committed error exceeds a first threshold, the data sent being a value of the committed error;
- obtaining at the destination the real data value corresponding to the certain time instant by applying the same prediction model used in the source and also applying the committed error if received from the source.

A second aspect of the present invention refers to a system configured to implement the optimization method described before by comprising the following components:
- at least one source which comprises:
   - a data collector for periodically collecting real data values of at least one variable at different time instants, wherein the collected values are used to generate a stream of data modeled as a time series of values, each value of the time series corresponding to a time instant;
   - a generator of prediction models to which the collected values from the data collector are input;
   - a first forecast module receiving one of the generated prediction models from the generator for generating a predicted value at a certain time instant for each real data value collected by the source, and computing a committed error by comparing the predicted value with the real data value collected at the certain time instant;
- and a destination which comprises:
   - a second forecast module receiving from the generator the same generated prediction model received by the first forecast module, through a communication channel connecting the source with the destination;
   - a correction module for obtaining real data value corresponding to the certain time instant by applying the received prediction model and, if a value of the computed committed error is received from the source, applying the committed error;
and wherein the source,if and only if the committed error exceeds a first threshold, sends to the destination the value of the committed error at the certain time instant within the time series.

The method and system in accordance with the above described aspects of the invention has a number of advantages with respect to the aforementioned prior art, which can be summarized as follows:
- Regarding US4953024, this prior art solution assumes that the inputs to the data system are images. Conversely, the inputs in the present invention are time series variables with a totally different nature. Therefore, event predictive reduction strategies to be applied in the present invention versus US4953024 applicable startegies are totally different. The present invention is virtually agnostic with respect to the encoding phase since the invention aims at minimizing the errors made in the previous prediction stage. In addition, the present invention assumes a more ambitious scenario in which data patterns can evolve over the time without affecting significantly the efficiency in the reduction of the amount of information to be transmitted (i.e. the present invention adapts dynamically the predictor model to data evolution constantly by adjusting its internal parameters in order to produce accurate predictions). On the contrary, providing that US4953024 utilizes a fixed set of rules to the encoding stage, it is likely that changes in the statistical distribution of the input data could produce non-optimal encoding results.
- Regarding US5907351, the prediction module disclosed in US5907351 is designed to work exclusively with phoneme signals as input. On the contrary, the predictor described in the present invention can accept as input any type of input signal, since it can dynamically adjust its internal parameters to fit as much as possible the nature of the input signal in order to predict values as close as possible to the real ones and independently of the nature of the input signal.
- In particular, the main technical advantage of this invention over the state-of-the-art is that the proposed predictors can dynamically adapt to data evolution by adjusting their internal parameters when prediction accuracy falls below a threshold and without manual intervention. In addition, the proposed predictors also add exogenous signals or variables as input in order to raise the accuracy of their predictions. Should several signals be monitored in the same machine, current predictors tend to consider each variable as an isolated signal and so potential correlations emerging among locally generated variables are not exploited. The present invention provides predictors that can exploit hidden correlations among several signals generated in the same location with the goal of raising the accuracy of each signal prediction.
- From a general perspective, the present invention aims to achieve highly efficient network resource consumption when transmitting time series of monitored data from the place where they are collected to a central point in which they will be processed. Therefore, this invention avoids hogging network links transmitting unnecessary data.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a real application scenario of a system for optimizing event prediction, according to a preferred embodiment of the invention.
Figure 2 shows a schematic diagram of how the system for optimizing event prediction works in the application scenario, according to a possible embodiment of the invention.
Figure 3 shows a flow of the optimization method performed by a client of the system in the application scenario, according to a possible embodiment of the invention.
Figure 4 shows a generalized model for multiple clients in the optimizing system, according to another possible embodiment of the invention.
Figure 5 shows convolutional filters used by the optimizing system, according to a further possible embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

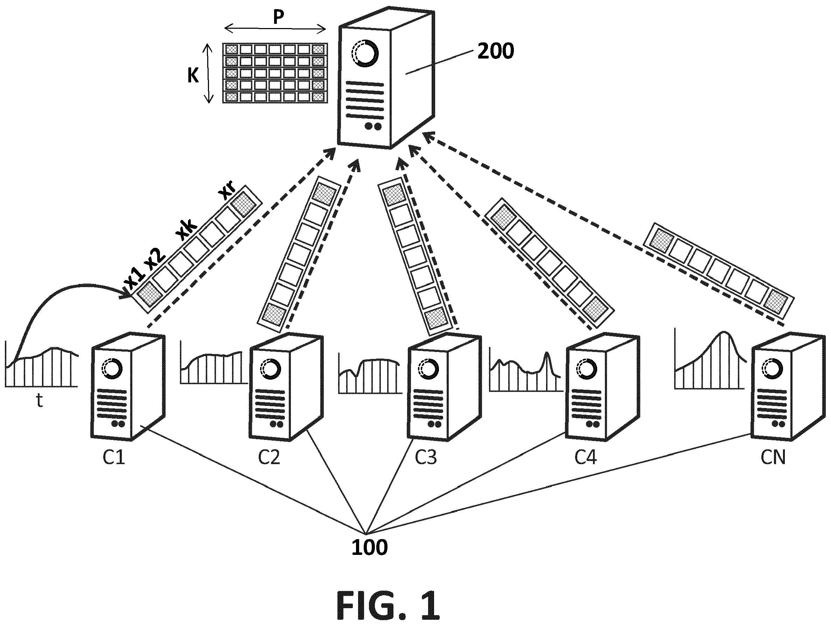

Figure 1 shows a possible scenario for use of the present invention in which a large number of machines are recurrently monitoring and sending local data to a central server at periodic time intervals for distributed analytics solutions (e.g., data centers, Internet of Things or loT scenarios). The goal of the present invention is to decrease the amount of data to be sent from a source **100** that collects data periodically to a destination **200** that process the received data. In this scenario, the proposed optimization method and system for predictors encode and transmit efficiently time series of evolutive data based on a predictor that dynamically adapts itself without manual intervention to changes in data patterns. The stream of data to be sent from the source **100** (e.g., a client **C1,** from a plurality of clients **C1, C2,..., CN,** of an analytics server) to the destination **200** (e.g., the analytics server) is modeled as a time series of the form **x1, x2, ..., xk,..., xr,** where **xk** represents the monitored value at a time instant t = k. Therefore, the number of bytes to be transmitted from the source **100** to the destination **200** is K*P where K is the number of samples monitored per second and P the number of bytes to be sent per sample. Providing that current scenarios involve a large number of sources **100,** e.g., multiple clients **C1, C2,..., CN,** sending in parallel samples of their monitored data, the required bandwidth to transmit them is determined by N*K*P where N is the number of sources **100** that are sending information to the destination **200.** For the sake of simplicity, all the sources **100** are supposed to be monitoring the same type of data and so, their monitoring frequency "K" and the number of bytes per sample "P" are identical. The main goal of this invention is to minimize the amount of bytes P sent from the source **100** to the destination **200,** at each time interval **t.**

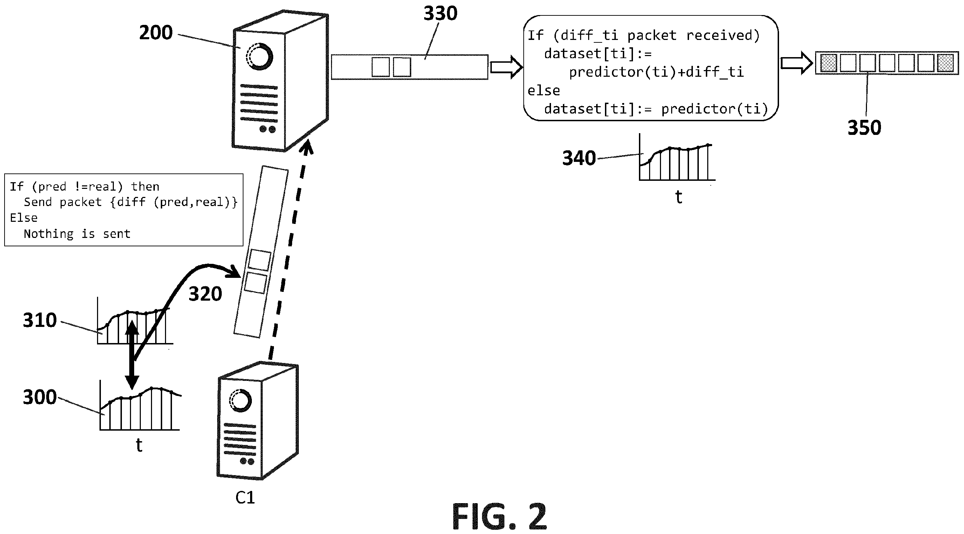

Figure 2 shows the source **100,** a client **C1** which is a computer equipment, sending a stream of data, for instance, samples of temperature at each time interval **t** monitored by a sensor measuring the CPU, central processing unit, temperature. To this end, a predictor module or apparatus is running simultaneously at the source **100** and the destination **200.** This predictor gets as input "r" consecutive previous real (collected) values **300** of the time series jointly with additional information (i.e. exogenous variables) obtained from the local environment or context. The output of the predictor is a predicted value **310** of the time series variable at the current instant **t.** The obtained prediction **310** is compared with the collected real value **300,** and in case the difference exceeds a first threshold, the committed error **320** is encoded to be efficiently transmitted to the destination **200.** In the case that the difference does not exceed said first threshold, nothing is transferred to the destination **200:** in this case, if the commited error **320** does not exceeed the threshold, then the "efficient" encoding produces an error 320 that is encoded as a value of 0 bytes (zero size), that is, no value is transmitted when the error **302** is smaller than the threshold. After receiving this information within the received samples **330,** the destination **200** decodes the error **320** and applies it to its own prediction **340** obtaining the real value as regenerated samples **350.** When the predictor module at source **100** detects a significant bias in the predicted values **310** with regards to the real values **300,** a new model is generated and sent to the destination **200.** Both source **100** and destination **200** synchronously substitute the old model with the new one, thus adapting dynamically the prediction values at source **310** and destination **340** to the statistical variations and evolutions that can appear in the time series data during the monitoring process. The predictor module is run in the source **100** (clients or data processor) and in the destination **200** (server or data gartherer), but only the source **100** has the opportunity to detect a bias in the predictions with respect to the real values. Therefore, when some bias is detected in source **100,** a new model is generated and sent to the destination **200** and, in turn, after receiving the new model in the destination **200,** both source **100** and destination **200** decide synchronously to substitute the old model with the new generated one.

The proposed method dynamically optimizes the accuracy of the predictor apparatus when this accuracy starts to decrease due to variations in the statistical distribution of the input time series. The dynamic optimization of the predictor is done by means of a process that adjusts its internal parameters without manual intervention by using as input the last 'p' observed values of the time series variable. This process can be implemented by iteratively optimizing an error function that measures the committed error **320** as the distance between the obtained prediction and the expected result. It should be noted that the optimization of the predictor apparatus is only triggered when the last 'k' errors become greater than a second predefined threshold 'th', which is greater than the previously mentioned first threshold. The main advantage of keeping the predictor apparatus dynamically optimized on evolutive data is that the amount of data to be transmitted to the destination **200** is minimized. A complementary advantage of this invention is that it is agnostic with respect to the encoding schema to be used. Therefore, many of the existing methods for efficiently encoding time series differences can be utilized at the output of the predictor apparatus. Furthermore, the grouped processing of time series variables generated in the same place (e.g. CPU load, network Input/Output activity and mainboard temperature in a physical machine) raises prediction accuracy for each variable by taking advantage of the potentially hidden correlations that can exist among the aggregated variables and signals.

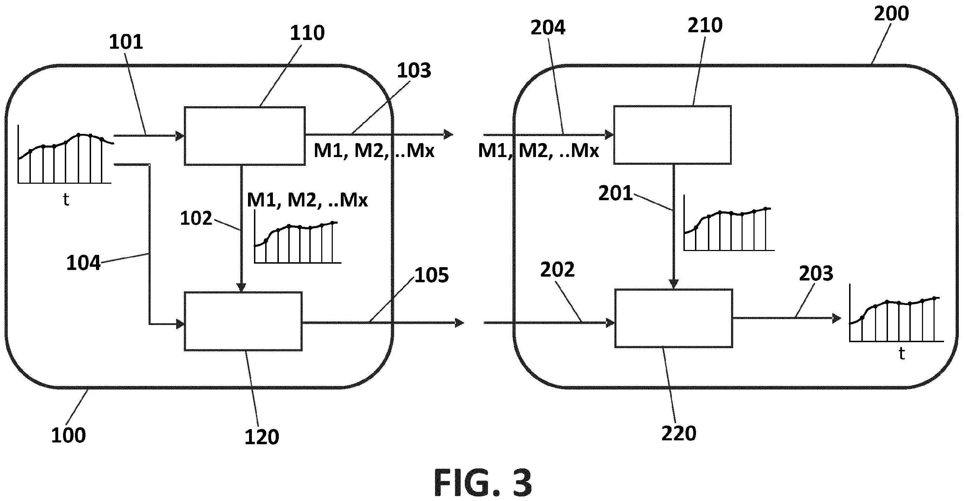

Figure 3 shows in further detail the predictor module running simultaneously at the source **100** and the destination **200.** The source **100** comprises a generator **110** of prediction models **M1, M2, M3, ..., Mx.** Firstly, an initial prediction model **M1** is set up using as input a previously collected time series of the variable to be modeled at the source **100,** e.g. client **C1.** Once that the initial model **M1** has been successfully adjusted to predict the previously collected time series, **M1** is transferred through a communication channel **103** to the destination **200,** e.g. Analytic Server. The prediction model **M1** is run synchronously in both ends, run respectively by a first forecast module **120** at the source **100** and a second forecast module **210** at the destination **200.** Additional incremental accurate versions of the prediction model, **M2, M3,... Mx,** trained and tested in the model generator **110** of the source **100** are transferred to the destination **200** using the same communication channel **103.** The first forecast module **120** receives **102** the prediction module **M1, M2, M3,... Mx** generated internally at the source **100** and the second forecast module **210** receives **204** the same prediction module **M1, M2, M3,... Mx** to use it at the destination **200.**

The source **100** starts to collect **101** data values of a variable (e.g. CPU temperature) at periodic time intervals and the collected data are transferred **104** to the first forecast module **120.** Each time instant't' a data value "v" is collected, the generated prediction module **M1, M2, M3,... Mx** received **102** and used by the first forecast module **120** generates a prediction "p" of this value at instant "t" using as input "r" consecutive previous values of the variable. As long as the prediction "p" is equal to the real value "v", the source **100** does not send any data to the destination **200.** Conversely, if both values "p" and "v" differ more than a predefined threshold, this difference "d" is coded and sent **105** to the destination **200.** Additionally, when the source **100** detects that the accuracy of the current prediction model Mᵢ decreases below the second threshold, a readjusting process is triggered in order to generate a new next model Mᵢ₊₁ that increases the accuracy of the predictions (i.e. decreases the difference between p and v). This allows a dynamic adaptability of predictions when data evolves and hence, the number of bytes to be encoded is kept near to the minimum theoretical error. This process does not happen for each prediction, because it would require a non-negligible amount of computational resources (to readjust the model) and bandwidth consumption (model transfer to the server), but in a programmatic way only when the errors exceed the second threshold.

At each time interval **t,** the destination **200** obtains **201** the prediction "p" from the second forecast module **210.** In case the destination **200** receives **202** a difference "d" from the source **100,** a correction module **220** combines "d" and "p" values to obtain **203** the real "v" value as output by executing the inverse operation that the source **100** computed when obtaining "d" from ""v" and "p" as input, e.g. d = v-p. Otherwise, if the destination **200** does not receive any difference from source **100,** the correction module **220** uses its own local prediction "p" from the second forecast module **210** to obtain **203** the real "v" value output, i.e. v = p, where "v" is the value monitored in the source **100.**

A predictor model could enhance the accuracy of its predictions adding to its input other (additional) variables that might exhibit complex correlations with the variable to be predicted. Additional variables may be obtained from outside the source **100** within the data system. The process to adjust model parameters is more complex when a set of variables is utilized as input, but the final accuracy is benefited from this aggregation. The exogenous variables can be input to the predictor as time series or as simple variables. For example, when predicting a percentage value of the CPU load variable, the predictor model can consider as input not only a time series of CPU percentage values but also another time series such as RAM memory usage and network I/O (number of packets transmited and received). It is expected that the three variables (CPU percentage, RAM memory usage and network I/O) can affect each other and so, these complex correlations can be exploited by utilizing three time series (ts1: cpu percentage, ts2: memory percentage, and ts3: network I/O) as input to the predictor model instead of a single ts1 time series. A further example is attack prediction in cybersecurity scenarios, wherein generating the predicted value **310** of a variable whose anomalous behavior is trying to be detected may use additional variables obtained from outside the (vulnerable) system which is susceptible to cyberattack, e.g., external variables to be input into the predictor may be obtained from the logs of a web server or from a firewall external to the vulnerable system. Generally speaking, an "extended telemetry" may be applied by using as input to the predictor model all the variables/data that are likely to have some influence on the variable to be predicted.

Existing variable length code schemas can be applied to efficiently send **105** the difference "d" from a client or source **100** to the server or destination **200.** In addition, a plurality of variables can be locally monitored at the source **100** and sent together to the destination **200** using this schema.

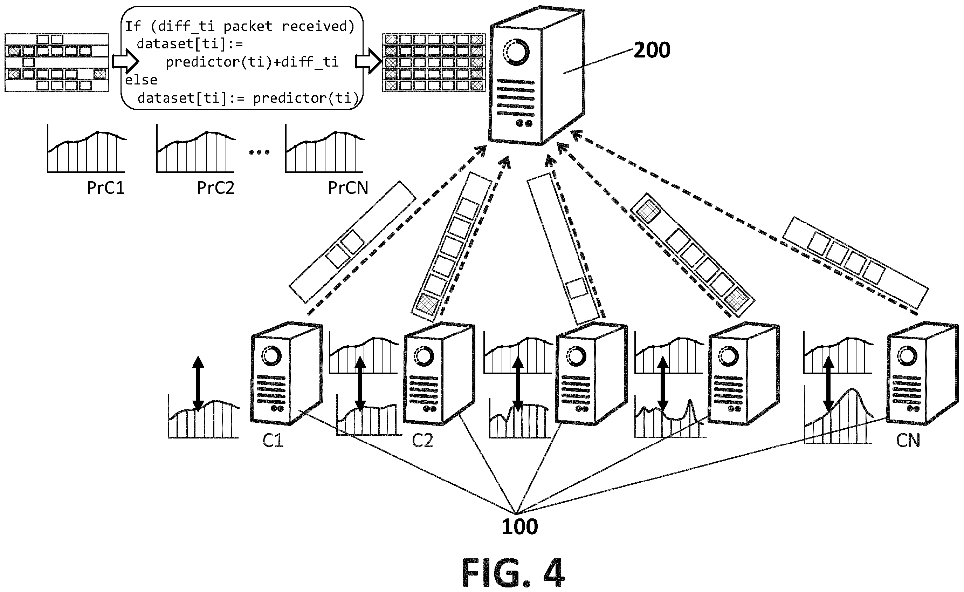

Figure 4 shows a generalized model for a plurality N of clients **C1, C2,..., CN,** each one being data source **100.** In this enhanced model each source **100** runs its own forecasting model and the server or destination **200** runs a forecasting model for each client. In case that several sources **100** share the same forecasting model an optimization consists of running one prediction model **PrC1, PrC2,** ..., **PrCN** per category of client **C1, C2,..., CN.**

In order to achieve the dynamic predictor adjustment, predictor accuracy is continuously measured in the source **100** by computing the error distance between the collected data values and the predicted ones. When errors become greater that the second predefined threshold value for a sustained period of time, an iterative optimization process is triggered for adjusting predictor model parameters. This iterative process fits these parameters using as input the last observed values of the time series including the ones that are producing the inaccurate predictions. The cost function to optimize at each iteration is computed as the mean of the distances between each real and predicted value. At each iteration the slope of the cost function is computed for each model parameter, and then each parameter is updated at the end of the iteration process by subtracting a percentage of the computed slope to it. The rationale of this update is to obtain a new parameter value that generates a lower cost. When a zero value is obtained for the slope, it means that this parameter is producing a minimum value in the cost function and therefore there is no room for further improvements in the parameter. The selected percentage value that is applied to each slope value modulates the converge speed of the process. The iterative process ends when a fixed number of iterations have been reached or when the cost value obtained at the end of the current iteration does not improve with respect to the previous iteration.

Providing that the signal values to be predicted are likely to contain complex non-linear dependencies between present and past events, traditional time series techniques (e.g. autoregressive integrated moving average model or ARIMA, generalized autoregressive conditional heteroskedasticity or GARCH) do not obtain accurate predictions. Even traditional machine learning (ML) models (e.g. support vector regression or SVR, Random Forest) are not likely to benefit from such dependencies. However, deep neural networks and in particular convolutional neural networks have the ability to model non-linear relationships in input data an in particular in time series. In the context of data center scenarios, convolutional neural networks are capable of predicting with accuracy complex time series (e.g. short term forecasting of traffic load in data center core networks).

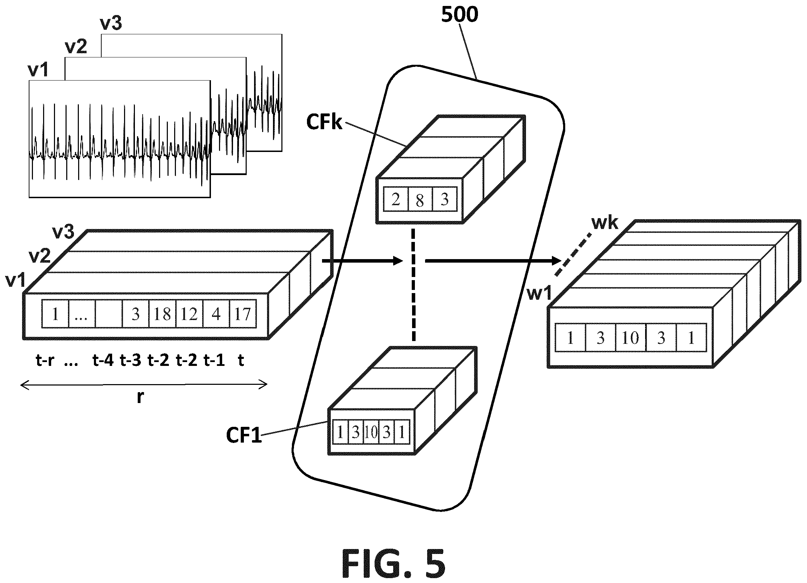

Figure 5 shows a basic convolutional block **500** in which three signals or variables **v1, v2, v3** are input as time series of length **r.** The convolutional block **500** comprises 'k' different convolutional filters **CF1,** ..., **CFk,** which are utilized for convolving the input times series and producing as output 'k' convolutions **w1,** ..., **wk** of the input data. Each filter **CF1,** ..., **CFk** is convolved across the input time series computing the dot product between the entries of the filter and consecutive sections of the input. The dimension of the resulting data block is (r-f+1, k) where 'f' is the size of the filter, e.g. f = 5 in Figure 5. Padding can be applied to the input data in order to keep in the output the same number of elements in the first dimension (columns). Note that the values of each filter cell are internal parameters of the model and are calculated during the optimization process of the model. In Figure 5 it is not shown the activation unit (e.g. Sigmoid or Rectified Linear -ReLu- functions) placed at the end of this convolutional block. This activation unit receives as input the output of the convolutional block and allows producing non-linear transformation on the input data.

Distributed versions of these optimization algorithms that have recently emerged can be used to this purpose. In addition, the same CNN model can be adjusted only one time and shared by a set of clients monitoring data with the same statistical distribution. For example, if working with a farm of similar machines with the same manufactured hardware, the same software running and equivalent computer load (quite common in Cloud and data-centers environments), it is expected a similar behaviour of the disk space, CPU load, CPU temperature, etc. Adjusting the model only one time, and exporting to multiples clients can simplify the management and optimize the use of computational resources in similar machines.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for optimizing event prediction in data systems, comprising:
- collecting (101), periodically at different time instants by at least one source (100) of a data system, real data values of at least one variable, wherein the collected values are used to generate a stream of data modeled as a time series of values, each value of the time series corresponding to a time instant;
- obtaining (203) the stream of data by a destination (200) of the data system;
**characterized by** further comprising:
- for each real data value (300) collected by each source (100), generating a predicted value (310) at a certain time instant (t) by using a prediction model (M1, M2, M3, ..., Mx) in the source (100);
- computing a committed error (320) by comparing the predicted value (310) with the real data value (300) collected at the certain time instant (t) in the source (100); and
- sending (105) data at the certain time instant (t) within the time series from the source (100) to the destination (200) only if the committed error (320) exceeds a first threshold, the data sent (105) at the certain time instant (t) by the source (100) being a value of the committed error (320);
- obtaining (203) the real data value corresponding to the certain time instant (t) at the destination (200) by applying the same prediction model (M1, M2, M3, ..., Mx) used in the source (100) and, if the value of the committed error (320) is received (202) from the source (100), applying the committed error (320).

2. The method according to claim 1, wherein generating the predicted value (310) at the certain time instant (t) uses a plurality of previous real values collected in the source (100) before the certain time instant (t).

3. The method according to claim 2, wherein generating the predicted value (310) at the certain time instant (t) further uses additional variables obtained from outside the source (100) and inside the data system.

4. The method according to any preceeding claim, further comprising, only if the committed error (320) exceeds a second threshold higher than the first threshold, generating the predicted value (310) using another prediction model (M2, M3, ..., Mx) different from the prediction model (M1, M2, M3, ..., Mx) previously used.

5. The method according to any preceeding claim, wherein the prediction model (M1, M2, M3, ..., Mx) used to generate the predicted value (310) is generated in the source (100) and received (204) at the destination (200) through a communication channel (103) from the source (100).

6. The method according to any preceeding claim, wherein the prediction model (M1, M2, M3, ..., Mx) is generated by using a convolutional neural network.

7. The method according to any preceeding claim, wherein, only if the committed error (320) exceeds the first threshold, the source (100) encodes the committed error (320) to obtain the value of the committed error (320) to be sent (105) as data at the certain time instant (t) by the source (100) and the destination (200) decodes the value of committed error (320) received (202) from the source (100).

8. A system for optimizing event prediction in data systems comprising at least one source (100) and a destination (200) connected through a communication channel (103); the system **characterized in that**
the, at least one, source (100) comprises:
- a data collector for collecting (101), periodically at different time instants, real data values of at least one variable, wherein the collected values are used to generate a stream of data modeled as a time series of values, each value of the time series corresponding to a time instant;
- a generator (110) of prediction models (M1, M2, M3, ..., Mx) to which the collected values from the data collector are input;
- a first forecast module (120) receiving (102) one of the generated prediction models (M1, M2, M3, ..., Mx) from the generator (110) for generating a predicted value (310) at a certain time instant (t) for each real data value (300) collected by the source (100) and computing a committed error (320) by comparing the predicted value (310) with the real data value (300) collected at the certain time instant (t);
and the destination (200) comprises:
- a second forecast module (210) receiving (204) one of the generated prediction models (M1, M2, M3, ..., Mx) which is the same one received (102) by the first forecast module (120), from the generator (110) through the communication channel (103);
- a correction module (220) for obtaining (203) real data value corresponding to the certain time instant (t) by applying the received (204) one of the generated prediction models (M1, M2, M3, ..., Mx) and by applying the committed error (320), if a value of the computed committed error (320) is received (202) from the source (100);
and wherein the source (100) sends (105) the value of the committed error (320) at the certain time instant (t) within the time series to the destination (200) only if the committed error (320) exceeds a first threshold.

9. The system according to claim 8, wherein the first forecast module (120) generates the predicted value (310) at the certain time instant (t) by using a plurality of previous real values collected in the source (100) before the certain time instant (t).

10. The system according to claim 9, wherein the first forecast module (120) generates the predicted value (310) at the certain time instant (t) by further using additional variables obtained from outside the source (100) and inside the system.

11. The system according to any of claims 8-10, wherein the first forecast module (120) generates the predicted value (310) using another prediction model (M2, M3, ..., Mx) generated by the generator (110) different from the prediction model (M1, M2, M3, ..., Mx) previously generated, only if the computed committed error (320) exceeds a second threshold higher than the first threshold.

12. The system according to any of claims 8-11, wherein the generator (110) of prediction models (M1, M2, M3, ..., Mx) is a convolutional neural network.

13. The system according to any of claims 8-12, comprising a plurality of sources (100) which are clients (C1, C2,..., CN) of different client categories, wherein the generator (110) of each client (C1, C2,..., CN) generates prediction models (PrC1, PrC2, ..., PrCN) depending upon the client category to be received (204) by the destination (200).
